# NOUVEAU FASCICULE DE BREVET EUROPEEN

(11) **EP 0 691 720 B2**
(45) Date de publication et mention de la décision concernant l'opposition: **23.04.2003**
(45) Mention de la délivrance du brevet: 16.09.1998
(21) Numéro de dépôt: 95420117.4
(22) Date de dépôt: 03.05.1995
(51) Int. Cl.: H02G 9/06

(54) **Système de protection et de positionnement d'un faisceau de câbles électriques**
Schutz- und Befestigungssystem für einen elektrischen Kabelbaum
System for protecting and fixing a cable loom

(30) Priorité: 06.07.1994 FR 9408592
(43) Date de publication de la demande: 10.01.1996
(73) Titulaire: SOFANOU S.A., 25340 Clerval (FR)
(72) Inventeur: Streit, Bernard, F-25340 Anteuil (FR)
(74) Mandataire: Moinas, Michel

(56) Documents cités:
- CA-A- 1 302 310
- DE-A- 3 040 894
- DE-C- 2 204 465
- DE-U- 8 809 540
- US-A- 3 951 439
- US-A- 4 342 475
- Konstruktionszeichnungen von einer Halterung und Wellrohren zum Bilden einer Sprudelbadmatte, hergestellt durch die Firma Fraenkische Rohrwerke und vertrieben unter der Bezeichnung "Luxana Compact Typ B220" durch die Firma Planeta Hausgeraete GmbH

## Description

La présente invention est relative à un système de protection et de positionnement d'un faisceau de câbles électriques, notamment au sein d'un véhicule automobile, d'un navire ou d'un appareil aérien, ce système comprenant une gaine annelée et une agrafe de fixation de la gaine à une paroi.

Les gaines annelées, c'est-à-dire celles dont la forme ressemble à une succession d'anneaux reliés les uns aux autres, sont usuellement réalisées en matière plastique tel que polypropylène extrudé. Le document CA-A-1 302 310 décrit un procédé de fabrication de ce type de gaine annelée. Ces gaines, usuellement en forme de tube, permettent la réalisation de réseaux de protection complexes pour des faisceaux de fils ou câbles électriques au sein d'un bâtiment naval, d'un avion, d'un hélicoptère ou d'une automobile et notamment dans le compartiment moteur. En effet, compte-tenu du faible espace disponible, ces gaines ou tuyaux doivent pouvoir suivre de très près les parois non rectilignes et contourner les différents organes rencontrés. Avec de telles gaines, on peut justement réaliser des courbes dont le rayon de courbure est inférieur à trois fois leur diamètre externe sans que celles-ci ne se déforment vers l'intérieur ou même se cassent.

Pour fixer ces gaines contre des parois, on utilise des agrafes se présentant sous la forme d'un clip circulaire complété d'un pion d'accrochage. Le clip peut être ouvert pour insertion entre deux cannelures de la gaine, puis être refermé et verrouillé au moyen d'un crochet s'engageant dans une oeillère présente à chaque extrémité du clip. Le pion d'accrochage peut comprendre une broche de fixation en plastique dont l'axe flexible radialement est introduit dans un orifice de la paroi à l'arrière duquel il s'élargit pour se maintenir en place. La tête de la broche peut se présenter sous la forme d'une collerette souple venant épouser la forme de la paroi autour de l'orifice qu'elle isole.

Apprécié pour sa mise en oeuvre rapide, ce type de protection trouve toutefois sa limite lorsqu'il est impératif que le faisceau passe définitivement selon un chemin très précis, notamment lorsqu'il passe très près d'une pièce en mouvement susceptible de l'arracher.

Dans un tel cas particulier, on réalise actuellement une goulotte monobloc en matière thermoplastique dont la face arrière reproduit scrupuleusement la forme de la paroi et dont la face avant présente un canal selon le chemin exactement voulu. Le positionnement de la goulotte contre la paroi étant alors unique, le faisceau est positionné de manière très précise. Ces goulottes sont toutefois particulièrement onéreuses car elles nécessitent un outillage spécial pour chaque forme ainsi qu'une quantité de matière plastique accrue.

Le but de la présente invention est un système de protection de faisceau de câbles électriques comprenant une gaine annelée et une agrafe pouvant être utilisé en lieu et place d'une goulotte pour des considérations de coût et de simplicité de mise en oeuvre.

Ce but est réalisé du fait que la gaine annelée présente, à intervalles très réguliers, un méplat au moins plus large que l'espace entre deux cannelures, et que l'agrafe de fixation de cette gaine présente, dans la face interne de son clip ceinturant la gaine, un organe détrompeur de la largeur du méplat.

Avantageusement, la gaine annelée présente une seconde série de méplats décalée par rapport à la première série, cette seconde série ayant un intervalle identique au premier, ou à l'un de ses multiples.

Les agrafes étant ainsi positionnées selon des cotes très précises le long de la gaine, il est alors possible de définir parfaitement le trajet d'un faisceau le long d'une paroi par la réalisation d'orifices exactement positionnés dans cette paroi. De surcroît, on retrouve la facilité de mise en place d'un réseau, ainsi que l'efficacité et la fiabilité dans le temps de la protection de faisceaux apportés par ce type de gaine.

Lorsque la gaine annelée est réalisée en comprimant un tube de plastique sortant d'une extrudeuse contre les faces internes crénelées d'une série de coquilles progressant avec l'avance du tube, on réalise avantageusement la série de méplats en modifiant une ou plusieurs crénelures de manière identique dans chaque coquille ou dans une série de coquilles régulièrement espacées.

Ce procédé de réalisation ne nécessite que la modification d'une ou plusieurs coquilles au sein d'une installation existante, ce qui s'avère particulièrement économique et rapide à réaliser.

L'invention sera mieux comprise à l'étude d'un mode de réalisation pris à titre nullement limitatif et illustré dans les figures annexées dans lesquelles :
- la figure 1 illustre une portion de gaine annelée selon l'invention,
- les figures 2a et 2b illustrent l'installation d'une agrafe de fixation sur une gaine selon la figure 1, et
- la figure 3 illustre schématiquement un procédé de réalisation d'une gaine selon la figure 1.

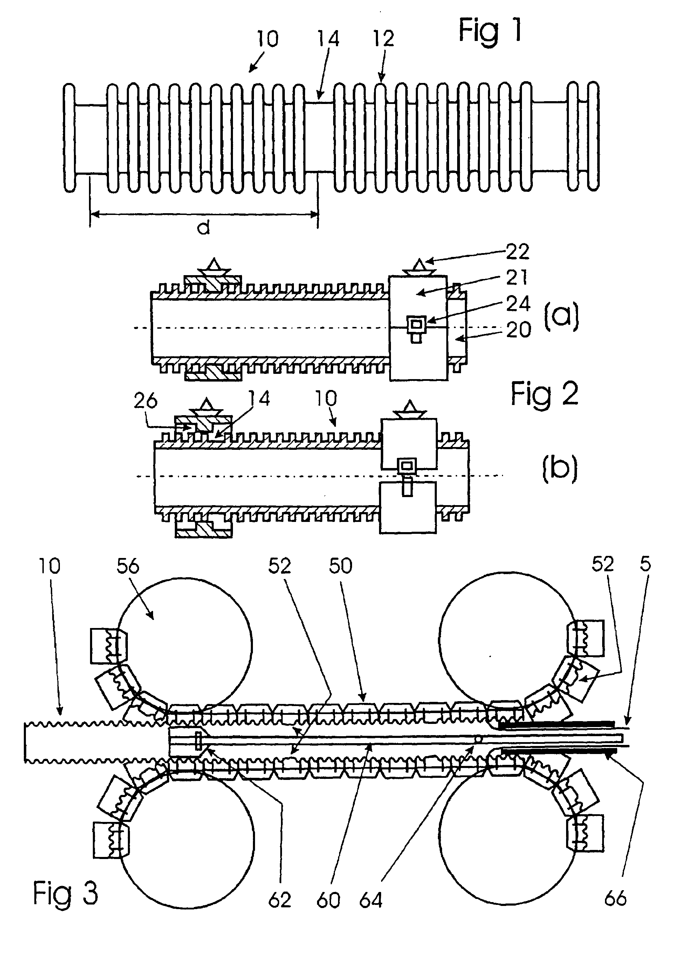

La figure 1 illustre, sensiblement à l'échelle réelle, une portion de tube annelé 10 utilisée pour réaliser un réseau complexe de gaines de protection mécanique, thermique et éventuellement phonique pour un faisceau de câbles d'un réseau électrique au sein d'un bâtiment ou d'un engin mobile. Ce tube se présente sous la forme d'une succession de cannelures 12 permettant de réaliser les courbes très serrées sans que ce tube ne se plie et s'écrase. Plus particulièrement selon l'invention, des méplats 14 sont réalisés à intervalles très réguliers (d) sous la forme de l'absence d'une ou de deux cannelures. On peut également envisager une seconde série de méplats décalés par rapport aux premiers avec un intervalle (d') identique au premier (d) ou égal à l'un des ses multiples (nd).

Comme illustré sur la figure 2a, ces tubes annelés 10 sont usuellement fixés contre une paroi au moyen d'agrafes 20. Une telle agrafe comprend un clip 21 ceinturant le tube, ce clip étant complété sur sa face externe par un pion d'attache 22. Ce pion est constitué d'une collerette souple prolongée d'un axe dont le diamètre peut être comprimé lors de l'introduction dans un orifice de la paroi. Les extrémités d'ouverture du clip 21 sont munies d'un moyen de verrouillage 24 tel qu'un crochet s'enclenchant dans une oeillère. Comme mieux visible sur la figure 2b, la face interne du clip 21 comprend une nervure 26 au minimum plus large qu'une cannelure 12 de telle sorte à faire office d'organe détrompeur.

Comme on peut bien le constater à l'examen des figures 2a et 2b, la présence de l'organe détrompeur 26 fait que le moyen de verrouillage 24 du clip 21 ne peut s'enclencher que si l'agrafe 20 est exactement positionnée en regard d'un méplat 14. De cette manière, on est sûr qu'un opérateur, même peu qualifié, positionnera ces agrafes en une cote très précise et non pas pardessus l'une quelconque des cannelures latérales. La fixation de la gaine annelée 10 peut donc s'effectuer selon des points très précis le long de la paroi imposant ainsi un chemin définitif à l'écart de tout risque quand bien même la place disponible est minimum.

La figure 3 illustre un dispositif conventionnel de fabrication de tubes annelés 10. Ce dispositif comprend notamment, à la sortie d'une extrudeuse 66, deux séries parallèles de coquilles 50 symétriques, chacune entraînée en amont et en aval par une paire de roues dentées de renvoi 56. La face interne de chaque coquille présente une forme semi-cylindrique striée transversalement par une série de cannelures en arc-de-cercle d'angle au sommet de 180 degrés. Ainsi, deux coquilles, une de chaque série, situées en vis-à-vis forment ensemble le pourtour complet d'une portion de gaine annelée 10.

Par ailleurs, un mandrin 60 émergeant hors de la sortie 66 de l'extrudeuse porte en son extrémité un bouchon de fermeture 62 isolant la partie aval de gaine annelée 10. Une surpression atmosphérique peut alors être appliquée entre ce bouchon de fermeture 62 et la sortie 66 de l'extrudeuse par injection d'air comprimé sortant d'une ouverture 64 du mandrin. Ainsi, un tube de plastique 5 encore chaud en sortie d'extrudeuse est immédiatement plaqué dans les cannelures des coquilles 50 pour prendre sa forme annelée définitive.

Plus particulièrement selon l'invention, il suffit de transformer une ou plusieurs cannelures internes des coquilles 50 sous forme de méplats 52 pour réaliser automatiquement la série de méplats cycliques 14 sur le tube annelé. Si ces méplats 52 sont présents sur chacune des coquilles, l'intervalle (d) est de l'ordre de 56 millimètres. Selon les besoins, on ne réalise de tels méplats que tous les deux, voire quatre coquilles pour obtenir un méplat tous les 112, 224 millimètres. On peut également envisager plusieurs méplats se suivant à des distances irrégulières au sein d'un cycle répétitif de cinq ou dix coquilles. Le cycle maximum au sein duquel on peut arranger les méplats selon différents écartements correspond à la développée de l'ensemble des coquilles constituant le train au sein d'une machine, soit en moyenne, sur un cycle de 2 mètres.

Les opérations de démontage, de transformation et de remise en place d'une ou plusieurs paires de coquilles sont particulièrement aisées en regard de la fabrication particulière d'un moule pour une goulotte selon l'art antérieur. On peut ainsi réaliser des tubes annelés comprenant des méplats selon des intervalles propres à chaque application.

De nombreuses améliorations peuvent être apportées à cette gaine dans le cadre des revendications.

## Revendications

1. Système de protection pour faisceau de câbles électriques comprenant une gaine annelée (10) et une agrafe de fixation de la gaine à une paroi, **caractérisé en ce que** la gaine présente, à intervalles (d) très réguliers, un méplat (14) au moins plus large que l'espace entre deux cannelures (12), l'agrafe (20) de fixation de cette gaine présentant, dans la face interne de son clip (21) ceinturant la gaine, un organe détrompeur (26) de la largeur du méplat (14).

2. Système de protection selon la revendication 1, **caractérisé en ce que** la gaine annelée (10) présente une seconde série de méplats (14) décalée par rapport à la première série, cette seconde série ayant un intervalle identique au premier (d) ou à l'un de ses multiples (nd).

## Patentansprüche

1. Schutzsystem für elektrische Kabelbäume, mit einem Wellrohr (10) und einer Klammer zur Befestigung des Rohres an einer Wand, **dadurch gekennzeichnet, daß** das Wellrohr in sehr regelmäßigen Abständen (d) eine Flachzone (14) aufweist, die zumindest breiter ist als der Abstand zwischen zwei Rillen (12), wobei die Klammer (20) zur Befestigung des Wellrohres, an der Innenseite ihrer Klemme (21), die das Wellrohr umgibt, eine Unverwechselbarkeitsenrichtung (26) für die Breite der Flachzone (14) aufweist.

2. Schutzsystem nach Anspruch 1, **dadurch gekennzeichnet, daß** das Wellrohr (10) eine zweite Serie von Flachzonen (14) aufweist, die in bezug auf die erste Serie versetzt sind, wobei diese zweite Serie ein Intervall aufweist, das mit dem ersten (d) oder einem seiner Vielfachen (nd) identisch ist.

## Claims

1. System for protecting a bundle of electric cables, comprising a corrugated sheath (10) and a buckle for securing the sheath to a wall, **characterized in that** the sheath has flats (14) which are spaced with very regular spacing (d), and are at least wider than then space between to corrugations (12) ; the securing buckle (20) for this sheath being provided in the inside face of its clip (21) which extends around the sheath, with a fool-proof positioning member (26) of the same width as said flat (14).

2. Protection system according to claim 1, **characterized in that** the corrugated sheath (10) has a second series of flats (14) offset relative to the first set, this second set having a spacing which is equal to the . first spacing (d) or to a multiple (nd) of the first spacing.
